# EUROPÄISCHE PATENTANMELDUNG

(11) **EP 4 380 315 A1**
(43) Veröffentlichungstag der Anmeldung: **05.06.2024**
(21) Anmeldenummer: 23212241.6
(22) Anmeldetag: 27.11.2023
(51) Int. Cl.: H05B 6/76, H05B 6/64

(54) **STEUERBOX FÜR EIN GARGERÄT SOWIE GARGERÄT**

(30) Priorität: 30.11.2022 DE 102022131743
(71) Anmelder: Topinox Sarl, 68270 Wittenheim (FR)
(72) Erfinder: FEHN, Heinrich, 68270 Wittenheim (FR); STROBL, Christoph, 68270 Wittenheim (FR); GRÜHBAUM, Klaus, 68270 Wittenheim (FR)
(74) Vertreter: Prinz & Partner mbB

(57) **Zusammenfassung**

Es wird eine Steuerbox (14) für ein Gargerät (10) angegeben, mit einem Gehäuse (20), in dem mindestens ein Dampfeinlass (18) und mindestens ein Dampfauslass (22) vorhanden sind, wobei in dem Gehäuse (20) mindestens eine Gitterstruktur (32) zur Abschirmung von Hochfrequenzstrahlung vorhanden ist, wobei die Gitterstruktur (32) bezogen auf einen Strömungsweg des Dampfes zwischen dem Dampfeinlass (18) und dem Dampfauslass (22) angeordnet ist, und wobei die Gitterstruktur (32) eine Vielzahl von Strömungskanälen (34) hat, die abschnittweise einen Strömungsweg für den durch den Dampfeinlass (18) eintretenden Dampf zum Dampfauslass (22) bilden. Zudem ist ein Gargerät (10) beschrieben.

## Beschreibung

Die Erfindung betrifft eine Steuerbox für ein Gargerät, das insbesondere das Garen eines Garguts mittels Dampf, Heißluft und/oder Mikrowellen ermöglicht. Derartige Gargeräte werden auch als Kombidämpfer bezeichnet. Ferner betrifft die Erfindung ein Gargerät.

Eine Steuerbox stellt eine Verbindung zwischen dem Garraum und einem Entlüftungsrohr oder einem Geräteausgang her, wodurch entstehender Dampf abgegeben werden kann. Bei Bedarf kann in der Steuerbox Dampf reduziert werden. Hierzu wird der Dampf innerhalb des Gargeräts zur Steuerbox geführt, in welcher der Dampf zum Beispiel durch Kondensation reduziert wird.

Eine Steuerbox dient insofern dazu, Dampf abzuführen, der bei einem Garvorgang in einem Garraum entsteht, damit möglichst wenig Dampf an einem Entlüftungsrohr eines Gargeräts entweicht. Hierzu wird der Dampf innerhalb des Gargeräts zur Steuerbox geführt, in welcher der Dampf kondensieren soll. Zum Kondensieren größerer Dampfmengen wird in der Steuerbox Wasser über die Wasserdüse zugeführt. Das Kondensat kann dann über einen Wasserauslass zu einer Abwasserleitung geführt werden.

Über einen längeren Zeitraum betrachtet können sich in der Steuerbox aber auch Ablagerungen bilden, da aus dem Garraum fetthaltige Wrasen in die Steuerbox strömen, welche ebenfalls über die Steuerbox abgeführt werden.

Insofern stellt die Steuerbox eine Verbindung zwischen dem Garraum und einem Geräteausgang her, worüber Garraumatmosphäre mit einem Dampfanteil und fetthaltige Wrasen abgeführt wird.

Bei der Garraumatmosphäre handelt es sich um (erwärmte) Luft aus dem Garraum, die den Dampfanteil und fetthaltige Wrasen umfassen kann.

Die unterschiedlichen Beheizungsarten eines Kombidämpfers setzen voraus, dass ein Druckausgleich und/oder ein Frischluftaustausch über die Steuerbox möglich ist. Bei einer automatischen Reinigung muss außerdem die Zu- und Abfuhr einer Reinigungsflotte möglich sein. Darüber hinaus ist es erforderlich, Mikrowellenstrahlen am Austreten aus dem Gargerät zu hindern.

Somit ergeben sich gegensätzliche Anforderungen, da für einen effizienten Frischluftaustausch sowie die Zu- und Abfuhr der Reinigungsflotte möglichst große Strömungsquerschnitte vorteilhaft sind. Für die effiziente Abschirmung von Mikrowellenstrahlen sollten jedoch möglichst keine bzw. möglichst kleine Öffnungen vorhanden sein.

Es ist daher eine Aufgabe der Erfindung, eine Steuerbox anzugeben, welche die vorgenannten, gegensätzlichen Anforderungen möglichst effizient und kostengünstig erfüllt.

Die Aufgabe wird erfindungsgemäß gelöst durch eine Steuerbox für ein Gargerät, mit einem Gehäuse, in dem mindestens ein Dampfeinlass und mindestens ein Dampfauslass vorhanden sind, wobei in dem Gehäuse mindestens eine Gitterstruktur zur Abschirmung von Hochfrequenzstrahlung (Mikrowellenstrahlung) vorhanden ist, wobei die Gitterstruktur bezogen auf einen Strömungsweg des Dampfes zwischen dem Dampfeinlass und dem Dampfauslass angeordnet ist. Die Gitterstruktur hat eine Vielzahl von Strömungskanälen, die abschnittweise einen Strömungsweg für den durch den Dampfeinlass eintretenden Dampf zum Dampfauslass bilden.

Durch die Gitterstruktur ist die Steuerbox gegen den Austritt von Mikrowellenstrahlen zuverlässig abgedichtet. Gleichzeitig erlauben die Strömungskanäle in der Gitterstruktur einen ungehinderten Austausch von Frischluft sowie von Reinigungsflotte.

Es ist denkbar, dass mehrere, beispielsweise zwei separate Gitterstrukturen vorhanden sind, die bezogen auf einen Strömungsweg des Dampfes nacheinander und mit einem Abstand zueinander angeordnet sind.

Grundsätzlich wird eine Garraumatmosphäre mit einem Dampfanteil und fetthaltigen Wrasen durch den Dampfeinlass und den Dampfauslass der Steuerbox geführt.

Mit anderen Worten ist der Dampfeinlass der Steuerbox eingerichtet, mit einem Garraum eines Gargeräts in Strömungsverbindung zu stehen, sodass eine Garraumatmosphäre mit einem Dampfanteil und fetthaltigen Wrasen über den Dampfeinlass vom Garraum in die Steuerbox einströmen kann.

Zudem ist der Dampfauslass der Steuerbox eingerichtet, mit einem Geräteausgang des Gargeräts in Strömungsverbindung zu stehen, sodass die in der Steuerbox eingeströmte Garraumatmosphäre mit dem Dampfanteil und den fetthaltigen Wrasen über den Dampfauslass von der Steuerbox an die Umgebung des Gargeräts abgeführt werden kann.

Insofern kann der Dampfeinlass der Steuerbox eine Schnittstelle zum Garraum ausbilden, wohingegen der Dampfauslass der Steuerbox eine Schnittstelle zur Umgebung des Gargeräts ausbildet.

Die Länge der Strömungskanäle kann im Verhältnis zu einem Strömungsquerschnitt eines einzelnen Strömungskanals derart gewählt sein, dass ein Leistungspegel einer auf die mindestens eine Gitterstruktur treffenden elektromagnetischen Welle mit einer Frequenz von 2,4 GHz bis 2,5 GHz durch die Gitterstruktur um mindestens 20 dB gedämpft wird, insbesondere um mindestens 40 dB.

Dadurch kann das Gargerät mit einer Mikrowellenleistung von bis zu 2 kW betrieben werden, was einem Leistungspegel von ca. 60 dBm entspricht. Durch die Dämpfung um 40 dB wird folglich ein Leitungspegel von ca. 20 dBm erreicht, was einer Mikrowellenleistung von 100 mW entspricht. Insbesondere wird die Mikrowellenleistung durch eine derartige Gitterstruktur um den Faktor 20.000 gedämpft. Die Dämpfung ist somit besonders effektiv. Für andere Frequenzbereiche kann eine Auslegung in äquivalenter Weise erfolgen.

Die Länge eines Strömungskanals erstreckt sich entlang der Richtung, in der der Dampf vom Dampfeinlass zum Dampfauslass strömt.

Wenn mehrere separate Gitterstrukturen nacheinander angeordnet sind, wird die vorgenannte Dämpfung durch die mehreren Gitterstrukturen in Kombination miteinander erreicht.

Die Strömungskanäle erstrecken sich nicht zwangsweise geradlinig, sondern können auch einfach oder mehrfach gekrümmt sein.

Beispielsweise ist die Länge der Strömungskanäle größer als die Materialstärke der Gitterstruktur, also der Wandstärke. Dies trägt ebenfalls zu einer zuverlässigen Abschirmung von Hochfrequenzstrahlung bei. Insbesondere sind die Strömungskanäle aktiv ausgebildet, da sie nicht bloß zwischen Öffnungen in der Gitterstruktur ausgebildet sind, was ohnehin kein Strömungskanal im Sinne der Erfindung ist.

Gemäß einem Ausführungsbeispiel haben die Strömungskanäle eine Länge von mindestens 20 mm, insbesondere von mindestens 40 mm. Bei einer derartigen Länge wird Mikrowellenstrahlung auch dann zuverlässig abgeschirmt, wenn die Strömungskanäle einen relativ großen Strömungsquerschnitt haben. Auf diese Weise ist ein Frischluftaustausch bzw. eine Zu- und Abfuhr der Reinigungsflotte besonders einfach möglich, ohne die Abschirmung von Hochfrequenzstrahlung zu beeinträchtigen.

Die mindestens eine Gitterstruktur erstreckt sich vorzugsweise über die gesamte Höhe und/oder die gesamte Breite der Steuerbox. Damit ist gemeint, dass kein Spalt zwischen der Gitterstruktur, insbesondere dessen Rand, und dem Gehäuse der Steuerbox vorhanden ist, durch den Mikrowellenstrahlung austreten kann. Die Stelle, an der die Gitterstruktur angeordnet ist, muss jedoch nicht zwingend die höchste bzw. die breiteste Stelle der Steuerbox sein. Dass die Gitterstruktur sich über die gesamte Höhe und/oder die gesamte Breite der Steuerbox erstreckt, trägt ebenfalls zu einem möglichst großen Strömungsquerschnitt für den Dampfauslass bei. Des Weiteren erhöht sich hierdurch die Stabilität der Steuerbox, da die Wandungen der einzelnen Strömungskanäle als Längsstreben zur Stabilisierung beitragen.

Gemäß einer Ausführungsform umgibt die Gitterstruktur den Dampfeinlass umfangsmäßig. Somit lassen sich Mikrowellenstrahlen am Dampfeinlass in alle Richtungen abschirmen.

Die mindestens eine Gitterstruktur kann dabei insgesamt ringförmig sein, wobei eine ringförmige Struktur im Sinne der Anmeldung neben Gitterstrukturen mit kreisförmigen oder ovalen Konturen auch Gitterstrukturen mit umfangsmäßig geschlossenen eckigen Konturen, insbesondere wabenförmigen Konturen umfasst. Insgesamt haben die einzelnen Strömungskanäle demnach eine zylindrische Form, beispielsweise eine kreiszylindrische Form.

Die mindestens eine Gitterstruktur kann mehrere Trennwände umfassen, die die Strömungskanäle definieren, wobei sich die Trennwände senkrecht von einem Gehäuseboden zu einer Gehäusedecke des Gehäuses erstrecken. Die Trennwände sind somit durch die Gehäusedecke und den Gehäuseboden abgestützt, wodurch die Gitterstruktur insgesamt stabilisiert ist.

Benachbarte Strömungskanäle können sich dabei eine Trennwand teilen. Mit anderen Worten definiert eine Trennwand zwei benachbarte Strömungskanäle. Hierdurch lässt sich der insgesamt zur Verfügung stehende Strömungsquerschnitt maximieren.

Im Falle einer, in Draufsicht bzw. im Querschnitt, ringförmigen Gitterstruktur kann die mindestens eine Gitterstruktur eine ringförmige Basis umfassen und die Trennwände können sich ausgehend von der Oberseite und der Unterseite der Basis erstrecken. Anders ausgedrückt sind die Trennwände durch die Basis unterbrochen, was der zusätzlichen Stabilisierung dient. Der Schwerpunkt der Gitterstruktur kann also im Bereich der Basis vorgesehen sein. Die Basis kann ferner im geometrischen Zentrum der Gitterstruktur vorgesehen sein. Zudem verbindet die Basis die einzelnen Trennwände, wodurch die ringförmige Gitterstruktur vor dem Einbau in die Steuerbox vorgefertigt sein kann.

Die Basis ist beispielsweise durch eine Platte (mit Öffnungen) gebildet.

Die Trennwände und die Basis sind beispielsweise miteinander verschweißt.

Zusätzlich zu der Basis kann eine Stabilisierung an den von der Basis weg gerichteten Enden der Trennwände befestigt sein, welche die Trennwände ebenfalls miteinander verbindet. Hierdurch wird die gesamte Gitterstruktur weiter versteift. Die zusätzliche Stabilisierung ist vorzugsweise ebenfalls jeweils durch eine Platte (mit Öffnungen) gebildet.

Gemäß einer beispielhaften Ausführungsform ist die mindestens eine Gitterstruktur durch ein Rohrpaket gebildet. Die einzelnen Rohre des Rohrpakets bilden an sich jeweils einen geschlossenen Kanal. Somit ist ein stirnseitiges Verschweißen der einzelnen Rohre des Rohrpakets ausreichend, um eine Mikrowellenleckage oder einen Dampfaustritt an der Gitterstruktur zu vermeiden. Anders ausgedrückt kann eine Längsverschweißung der Kanäle entfallen. Gegenüber einer durch ein Gussteil gebildeten Gitterstruktur hat diese Ausführungsform außerdem den Vorteil, dass kein aufwendiges Werkzeug zur Herstellung der Gitterstruktur erforderlich ist.

Zur Herstellung der Gitterstruktur können Standardrohre verwendet werden, beispielsweise Vierkantrohre. Die Verwendung von Vierkantrohren hat den Vorteil, dass die Rohre sich lückenlos aneinanderreihen lassen, wodurch eine kompakte Bauweise erreicht wird.

Ein weiterer Vorteil einer durch ein Rohrpaket gebildeten Gitterstruktur ist, dass die Steuerbox im Bereich der Gitterstruktur keine zusätzliche Außenwandung haben muss, sondern dass die Außenwandung durch die Gitterstruktur selbst gebildet sein kann. Konkret kann die Gitterstruktur mit einem Vorder- und einem Hinterteil der Steuerbox fluiddicht verbunden sein, insbesondere verschweißt sein.

Zudem können vier Vierkantrohre in drei Reihen und drei Spalten angeordnet und jeweils an ihren Längskanten miteinander verschweißt sein, sodass in der Mitte ein weiterer Strömungskanal gebildet ist. Hierdurch ergeben sich mit nur vier Vierkantrohren dann insgesamt fünf Strömungskanäle.

Gemäß einer weiteren Ausführungsform kann die mindestens eine Gitterstruktur durch mehrere abgekantete Bleche gebildet sein. Im Vergleich zu einem Rohrpaket oder einem Gussteil kann eine solche Gitterstruktur ein geringes Gewicht haben.

Die Bleche sind vorzugsweise entlang der gesamten Länge der Gitterstruktur verschweißt, wodurch eine Leckage von Mikrowellen oder Dampf zuverlässig vermieden wird.

Gemäß einer weiteren Ausführungsform ist die Gitterstruktur durch ein Gussteil gebildet. Eine Fertigung der Gitterstruktur als Gussteil bietet sich insbesondere dann an, wenn hohe Stückzahlen gefertigt werden. Zudem sind bei einem Gussteil keine zusätzlichen Arbeitsschritte erforderlich, um die Strömungskanäle gegenüber einer Leckage von Dampf oder Mikrowellen abzudichten.

Das Gussteil kann ebenso wie das Rohrpaket die Außenwandung der Steuerbox bilden.

Die Strömungskanäle können eine Höhe und/oder eine Breite oder einen Durchmesser von mindestens 20 mm haben. Bei einer variierenden Höhe bzw. einer variierenden Breite eines Strömungskanals wie bei Wabenstruktur bezieht sich die Angabe auf die maximale Höhe bzw. die maximale Breite des Strömungskanals. Bei einer derartigen Dimensionierung der Strömungskanäle ist ein besonders effizienter Frischluftaustausch durch die Gitterstruktur hindurch möglich.

Je größer der Strömungsquerschnitt der einzelnen Strömungskanäle ist, umso länger müssen die Strömungskanäle sein, um eine gleich große Dämpfung der Hochfrequenzstrahlung zu erreichen. Dabei gibt es einen maximalen Querschnitt, der für das entsprechende Frequenzband einer Grenzfrequenz (Cutoff-Frequenz) entspricht.

Die Steuerbox ist insbesondere eingerichtet, eine über den Dampfeinlass erhaltene Garraumatmosphäre mit einem Dampfanteil und fetthaltigen Wrasen über den mindestens einen Dampfauslass an eine Umgebung abzugeben. Insofern wird über die Steuerbox nicht nur reiner Dampf, sondern auch fetthaltige Wrasen aus dem Garraum abgeführt, von dem die Garraumatmosphäre erhalten worden ist, die den Dampf(anteil) und die fetthaltigen Wrasen aufweist. Die Garraumatmosphäre mit dem Dampfanteil und den fetthaltigen Wrasen wird also durch die Steuerbox geführt, um an eine Umgebung abgegeben zu werden, also abgeführt zu werden.

Ferner betrifft die Erfindung ein Gargerät zum Garen von Gargut. Das Gargerät weist einen Garraum, einer Mikrowellenquelle, die eingerichtet ist, Hochfrequenzstrahlung in den Garraum einzuspeisen, einen Geräteausgang zur Umgebung des Gargeräts und einer Steuerbox auf. Die Steuerbox hat ein Gehäuse, in dem mindestens ein Dampfeinlass und mindestens ein Dampfauslass vorhanden sind. Im Gehäuse ist mindestens eine Gitterstruktur zur Abschirmung der Hochfrequenzstrahlung vorhanden. Die Gitterstruktur ist bezogen auf einen Strömungsweg des Dampfes zwischen dem Dampfeinlass und dem Dampfauslass angeordnet ist. Der Dampfeinlass steht mit dem Garraum in Strömungsverbindung. Der Dampfauslass steht mit dem Geräteausgang in Strömungsverbindung. Die Gitterstruktur der Steuerbox schirmt also die von der Mikrowellenquelle in den Garraum eingespeiste Hochfrequenzstrahlung (Mikrowellenstrahlen bzw. Mikrowellen), sodass diese nicht aus dem Gargerät austreten können, insbesondere über den Geräteausgang zur Umgebung des Gargeräts, welcher mit dem Dampfauslass in Strömungsverbindung steht.

Der Geräteausgang des Gargeräts stellt also einen Ausgang des Gargeräts zur Umgebung des Gargeräts dar, über den die Garraumatmosphäre mit dem Dampfanteil und den fetthaltigen Wrasen abgeführt werden kann.

Bei der Mikrowellenquelle kann es sich um ein Halbleiter-Bauteil oder eine Elektronenröhre (z.B. Magnetron) handeln.

Ein Aspekt sieht vor, dass über die Steuerbox eine Strömungsverbindung zwischen dem Garraum und der Umgebung des Gargeräts ausgebildet ist. Die Steuerbox ist also nicht im Garraum des Gargeräts angeordnet bzw. unterteilt den Garraum in zwei Bereiche oder Kammern, sondern stellt sicher, dass die im Garraum vorhandene Garraumatmosphäre mit dem Dampfanteil und den fetthaltigen Wrasen aus dem Garraum über die Steuerbox an die Umgebung abgeführt werden kann, sofern dies gewünscht ist.

Anders ausgedrückt wird die Garraumatmosphäre mit dem Dampfanteil und den fetthaltigen Wrasen außerhalb eines Gehäuses des Gargeräts abgeführt, das den Garraum und einen Technikraum umgibt, in dem unter anderem die Steuerbox angeordnet sein kann.

Gemäß einem weiteren Aspekt steht der Dampfauslass mit dem Geräteausgang über ein Entlüftungsrohr in Strömungsverbindung. Von der Steuerbox, insbesondere dessen Dampfauslass, führt also das Entlüftungsrohr zum Geräteausgang des Gargeräts, sodass der Dampf und die fetthaltigen Wrasen vom Dampfauslass der Steuerbox über das Entlüftungsrohr zum Geräteausgang des Gargeräts gelangen, wo der Dampf und die fetthaltigen Wrasen dann an die Umgebung des Gargeräts abgegeben werden.

Grundsätzlich ermöglicht die Steuerbox demnach auch einen Druckausgleich zwischen dem Garraum und der Umgebung des Gargeräts, da der Dampfeinlass mit dem Garraum in Strömungsverbindung steht, wohingegen der Dampfauslass mit der Umgebung des Gargeräts in Strömungsverbindung steht.

Die beim Gargerät vorgesehene Steuerbox kann gemäß der zuvor genannten Art ausgebildet sein, also die entsprechenden Aspekte und Eigenschaften aufweisen.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 schematisch ein erfindungsgemäßes Gargerät mit einer erfindungsgemäßen Steuerbox,
- Figur 2 eine Gitterstruktur für eine Steuerbox,
- Figur 3 die Gitterstruktur aus Figur 2 in einer Steuerbox,
- Figur 4 eine weitere Gitterstruktur für eine Steuerbox,
- Figur 5 die Gitterstruktur aus Figur 4 in einer Steuerbox,
- Figur 6 eine erfindungsgemäße Steuerbox mit einer Gitterstruktur gemäß einer weiteren Ausführungsform, und
- Figur 7 eine erfindungsgemäße Steuerbox mit einer Gitterstruktur gemäß einer weiteren Ausführungsform.

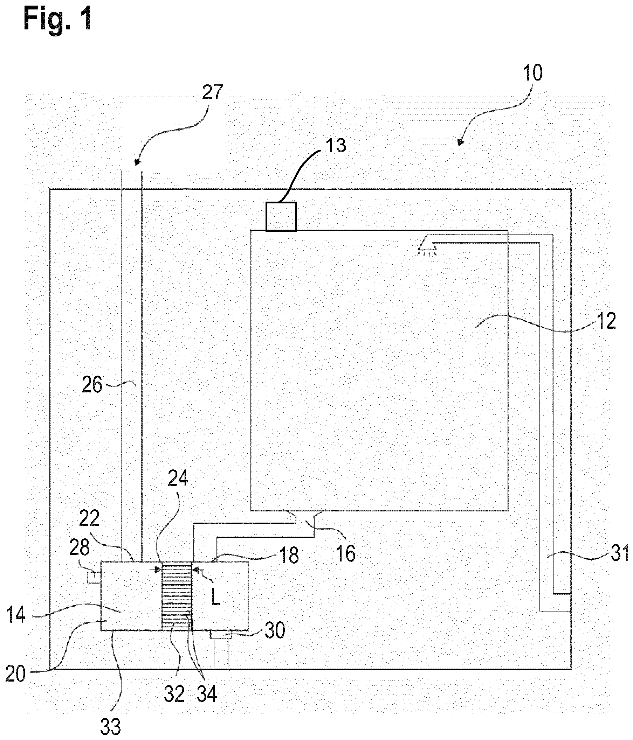

Figur 1 veranschaulicht schematisch ein Gargerät 10 mit einem Garraum 12, in dem zu garendes Gargut eingebracht wird. Das Gargut kann dabei unter anderem mittels Heißluft, Dampf und Mikrowellenstrahlung gegart werden. Das Gargerät 10 weist also zumindest eine Mikrowellenquelle 13 auf, die eingerichtet ist, Hochfrequenzstrahlung in den Garraum 12 einzuspeisen.

Das Gargerät 10 hat eine Steuerbox 14, welche dazu dient, Dampf aus dem Garraum 12 zu kondensieren. Zudem kann über die Steuerbox 14 ein Druckausgleich zwischen dem Garraum 12 und der Umgebung erfolgen.

Hierzu führt eine Dampfleitung 16 vom Garraum 12 zu einem Dampfeinlass 18, der in einem Gehäuse 20 der Steuerbox 14 gebildet ist.

Über einen Dampfauslass 22, der ebenfalls im Gehäuse 20 gebildet ist, insbesondere an einer Gehäusedecke 24 der Steuerbox 14, kann nicht kondensierter Dampf durch ein Entlüftungsrohr 26 aus der Steuerbox 14 entweichen.

Das Entlüftungsrohr 26 führt von der Steuerbox 14, insbesondere dem Dampfauslass 22, zu einem Geräteausgang 27 zur Umgebung des Gargeräts 10.

Insofern ist über die Steuerbox 14 eine Strömungsverbindung zwischen dem Garraum 12 und der Umgebung des Gargeräts 10 ausgebildet, da der Dampfeinlass 18 mit dem Garraum 12 in Strömungsverbindung steht und der Dampfauslass 22 mit der Umgebung des Gargeräts 10 in Strömungsverbindung steht.

Daher kann auch der Druckausgleich zwischen dem Garraum 12 und der Umgebung des Gargeräts über die Steuerbox 14 (und das Entlüftungsrohr 26) erfolgen. Je nach Position der Steuerbox 14 in Bezug auf den Geräteausgang 27 kann das Entlüftungsrohr 26 kürzer oder länger ausgeführt sein oder sogar gar nicht vorhanden sein.

In dem Gehäuse 20 der Steuerbox 14 ist außerdem eine Wasserdüse 28 vorhanden, über die Wasser in die Steuerbox 14 gesprüht werden kann, um den Dampf zu kondensieren.

Des Weiteren ist im Gehäuse 20 der Steuerbox 14 ein Wasserauslass 30 vorhanden, über den der kondensierte Dampf und das eingesprühte Wasser abfließen können. Der Querschnitt des Wasserauslasses 30 ist so gewählt, dass eine Abschirmung der Mikrowellen sichergestellt ist. Das heißt, dass der maximale Querschnitt so gewählt ist, dass dieser unterhalb der zugeordneten Grenzfrequenz (Cutoff-Frequenz) liegt.

Der Wasserauslass 30 ist unterhalb des Dampfeinlasses 18 vorgesehen. Somit kann Abwasser, das beispielsweise durch den Dampfeinlass 18 in die Steuerbox 14 fließt, wie zum Beispiel nach einer Reinigung des Garraums 12, durch die Steuerbox 14 abfließen.

Zudem kann über den Dampfeinlass 18 und den Wasserauslass 30 eine Reinigungsflotte abfließen, die dem Garraum 12 über ein Reinigerrohr 31 zugeführt wurde.

Der Wasserauslass 30 kann in einem Boden 33 oder in einer Seitenwandung angrenzend an den Boden 33 der Steuerbox 14 angeordnet sein.

In der Steuerbox 14 ist erfindungsgemäß eine Gitterstruktur 32 zur Abschirmung von Hochfrequenzstrahlung (Mikrowellenstrahlung) vorhanden, insbesondere zur Abschirmung von Hochfrequenzstrahlung, die von der Mikrowellenquelle 13 erzeugt worden ist, um das Gargut im Garraum 12 zu garen.

Die Gitterstruktur 32 ist bezogen auf einen Strömungsweg des Dampfes zwischen dem Dampfeinlass 18 und dem Dampfauslass 22 angeordnet.

Wie in Figur 1 schematisch veranschaulicht ist, hat die Gitterstruktur 32 eine Vielzahl von Strömungskanälen 34, die abschnittweise einen Strömungsweg für den durch den Dampfeinlass 18 eintretenden Dampf zum Dampfauslass 22 bilden.

Die Länge L der Strömungskanäle 34 ist im Verhältnis zu einem Strömungsquerschnitt eines einzelnen Strömungskanals 34 derart gewählt, dass ein Leistungspegel einer auf die Gitterstruktur 32 treffenden elektromagnetischen Welle mit einer Frequenz von 2,4 GHz bis 2,5 GHz durch die Gitterstruktur 32 um mindestens 40 dB gedämpft wird.

Dabei ist zu berücksichtigen, dass, je größer der Strömungsquerschnitt der einzelnen Strömungskanäle 34 ist, die Länge der Strömungskanäle 34 umso länger sein muss, um die gleiche Dämpfung zu erreichen.

Eine Frequenz von 2,4 GHz bis 2,5 GHz entspricht einer Wellenlänge in Luft von ca. 125 mm.

Insbesondere ist die Länge L der Strömungskanäle 34 größer als die Materialstärke der Gitterstruktur 32, was in den nachfolgenden Figuren verdeutlicht wird. Die Strömungskanäle 34 sind demnach strukturell ausgebildet und stellen nicht bloß Öffnungen dar. Mit der Materialstärke ist in diesem Fall die Wandungsstärke der Gitterstruktur 32 gemeint, also deren Höhe oder Breite.

Beispielsweise haben die Strömungskanäle 34 eine Länge L von 20 mm und eine Höhe und/oder eine Breite oder einen Durchmesser von mindestens 20 mm.

In einem konkreten Ausführungsbeispiel haben die Strömungskanäle 34 jeweils eine Höhe und eine Breite von 40 mm und eine Länge von 60 mm.

In einem alternativen Ausführungsbeispiel sind die Strömungskanäle 34 beispielsweise rohrförmig und haben einen Durchmesser von 40 mm und eine Länge von 50 mm.

In den nachfolgenden Figuren sind unterschiedliche Ausführungsformen der Gitterstruktur 32 veranschaulicht.

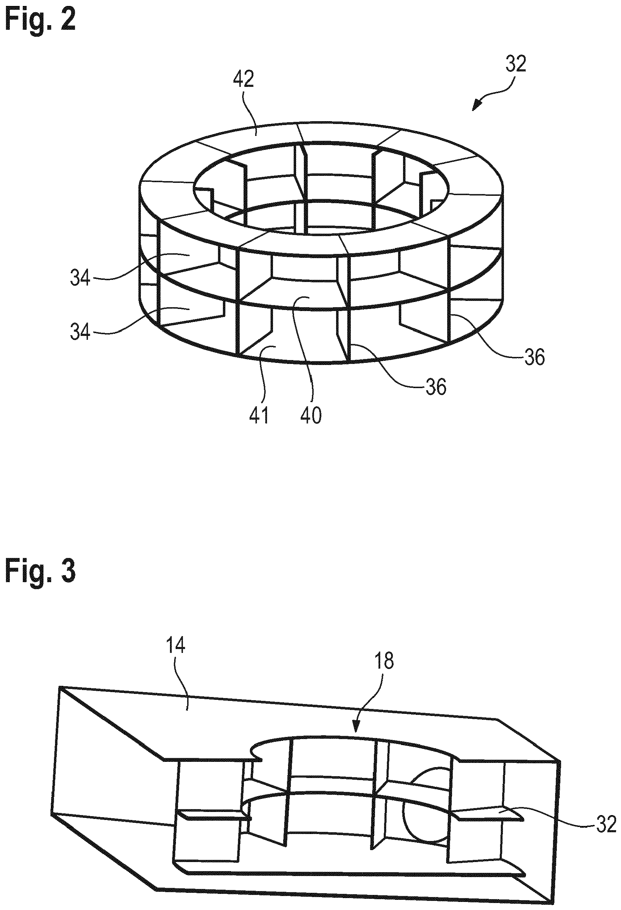

Die Figuren 2 und 3 veranschaulichen eine Gitterstruktur 32 für eine Steuerbox 14 gemäß einer ersten Ausführungsform, wobei Figur 2 die Gitterstruktur 32 separat darstellt und Figur 3 die Gitterstruktur 32 in einer Einbausituation zeigt, wobei der Einfachheit halber nur ein Teil der Steuerbox 14 im Bereich des Dampfeinlasses 18 dargestellt ist.

Die in den Figuren 2 und 3 veranschaulichte Gitterstruktur 32 ist ringförmig ausgebildet und umgibt in eingebautem Zustand den Dampfeinlass 18 umfangsmäßig.

Insbesondere ist die ringförmige Gitterstruktur 32 konzentrisch zum Dampfeinlass 18 angeordnet.

Dabei erstreckt sich die Gitterstruktur 32 über die gesamte Höhe der Steuerbox 14.

Die Gitterstruktur 32 umfasst mehrere Trennwände 36, die die Strömungskanäle 34 definieren, wobei sich die Trennwände 36 senkrecht von dem Gehäuseboden 33 zu der Gehäusedecke 24 des Gehäuses 20 erstrecken.

Dabei umgeben die Trennwände 36 den Dampfeinlass 18 sternförmig.

Die Strömungskanäle 34 weiten sich somit in Richtung vom Dampfeinlass 18 weg trichterförmig auf. Mit anderen Worten sind die Strömungskanäle 34 in Draufsicht auf die Gitterstruktur 32 radial angeordnet, sodass sie sich in Draufsicht auf die Gitterstruktur 32 fiktiv im Zentrum schneiden würden.

Die Gitterstruktur 32 umfasst außerdem eine ringförmige Basis 40, die zur Stabilisierung der Gitterstruktur 32 dient.

Die Trennwände 36 erstrecken sich ausgehend von der Oberseite und der Unterseite der Basis 40, also an entgegengesetzten Seiten der Basis 40. Durch die Basis 40 wird somit das Gitter erzeugt, das zur Abschirmung der Mikrowellenstrahlen dient.

Die Basis 40 befindet sich im Ausführungsbeispiel auf halber Höhe der Trennwände 36 bzw. der Steuerbox 14. Hierdurch wird eine maximale Stabilisierung der Gitterstruktur 32 erreicht.

Wenn eine Steuerbox 14 mit einer größeren Höhe vorhanden ist, kann die Basis 40 mehrfach vorhanden sein, um eine geeignete Gitterstruktur zur Abschirmung von Mikrowellenstrahlen zu erreichen.

Optional hat die Gitterstruktur 32, wie besonders gut in Figur 2 zu sehen ist, jeweils eine weitere Stabilisierung in Form einer (geschlossenen bzw. mit zentraler Öffnung vorgesehener) Platte 41, 42.

Die in den Figuren 2 und 3 veranschaulichte Gitterstruktur 32 ist beispielsweise aus miteinander verschweißten Blechteilen gebildet.

Eine Breite der Strömungskanäle 34 beträgt gemessen am äußeren Umfang der Gitterstruktur 32 beispielsweise 40 mm.

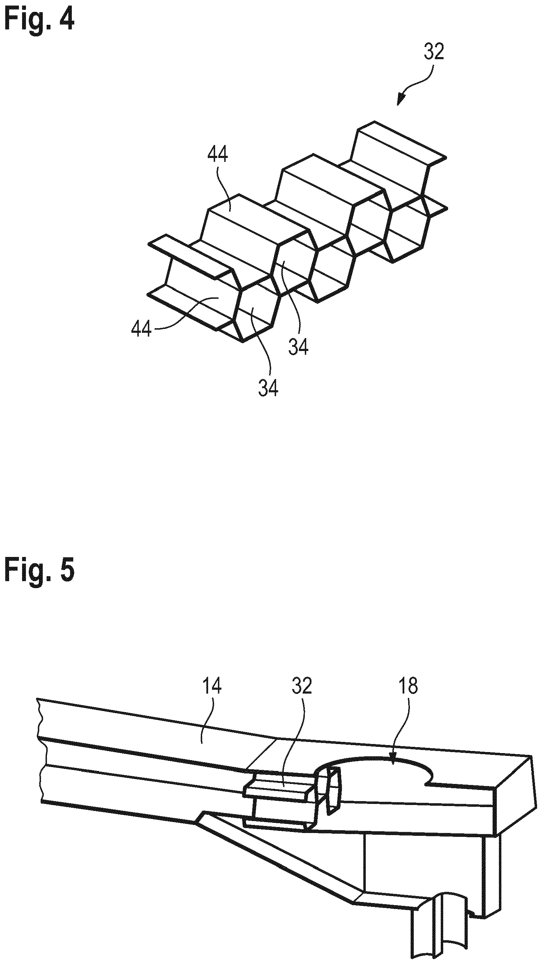

Die Figuren 4 und 5 veranschaulichen eine Gitterstruktur 32 für eine Steuerbox 14 gemäß einer weiteren Ausführungsform.

Die in den Figuren 4 und 5 gezeigte Gitterstruktur 32 ist durch mehrere abgekantete Bleche 44 gebildet.

Die einzelnen abgekanteten Bleche 44 sind derart aufeinandergestapelt, dass die Gitterstruktur 32 mit mehreren Strömungskanälen 34 gebildet ist.

Zur Befestigung sind die Bleche 44 in Längsrichtung durchgehend stoffschlüssig verbunden, insbesondere verschweißt, sodass die einzelnen Strömungskanäle 34 in Umfangsrichtung fluiddicht gegeneinander abgedichtet sind.

Im Ausführungsbeispiel sind die Querschnitte der Strömungskanäle 34 wabenförmig. Hierdurch ergibt sich insgesamt eine kompakte Anordnung zahlreicher Strömungskanäle 34. Es sind jedoch auch andere Formen denkbar, je nachdem, wie die Bleche 44 abgekantet werden. Beispielsweise können die Strömungskanäle 34 auch rechteckig sein.

Wie in Figur 5 zu sehen ist, erstreckt sich die Gitterstruktur 32 über die gesamte Höhe und die gesamte Breite der Steuerbox 14. Sowohl der Dampf als auch die Mikrowellenstrahlung muss also die Gitterstruktur 32 durch die Strömungskanäle 34 passieren, wodurch eine Dämpfung der Mikrowellenstrahlung gewährleistet ist.

Dabei ist die Länge der Strömungskanäle 34 größer als eine Höhe der Gitterstruktur 32.

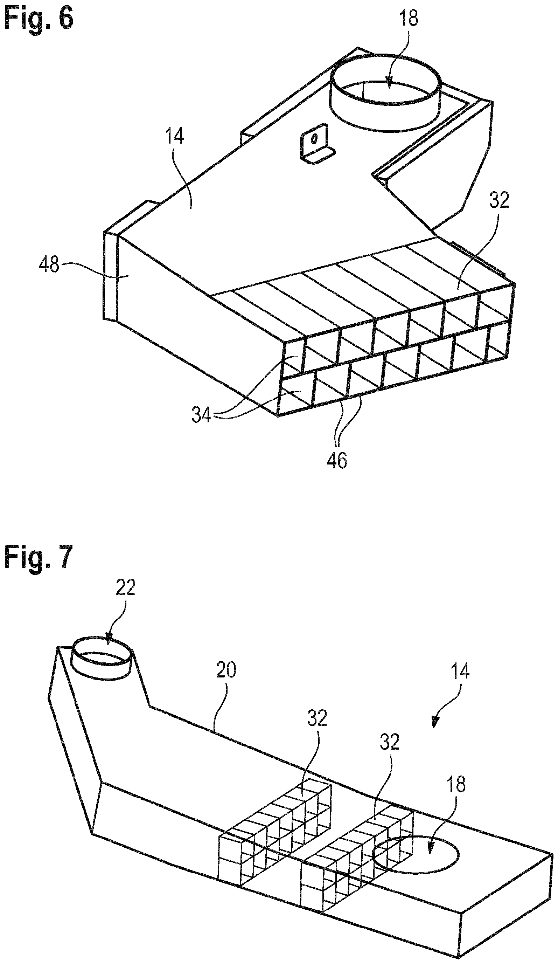

Figur 6 zeigt eine Steuerbox 14 gemäß einer weiteren Ausführungsform mit einer alternativen Gitterstruktur 32.

Die in Figur 6 veranschaulichte Gitterstruktur 32 ist durch ein Rohrpaket gebildet.

Im Ausführungsbeispiel setzt sich das Rohrpaket aus Vierkantrohren zusammen, es sind jedoch auch andere Rohrformen denkbar.

Die einzelnen Rohre 46 des Rohrpakets sind mit Versatz aufeinander gestapelt.

Durch den Versatz der Rohre 46 ist der Schweißprozess vereinfacht.

Insbesondere sind die Rohre 46 nicht ideal eckig, sondern sind an ihren Ecken leicht abgerundet. Dadurch ergeben sich dort, wo die Rohre 46 aneinanderstoßen, kleine Öffnungen, die zugeschweißt werden müssen. Wenn die Rohre 46 mit Versatz zueinander angeordnet sind, ergeben sich kleinere Öffnungen als bei einer Anordnung ohne Versatz, wodurch die Öffnungen leichter geschlossen werden können.

Eine Anordnung ohne Versatz ist jedoch ebenfalls möglich.

Die Rohre 46 sind stirnseitig miteinander verbunden, insbesondere stoffschlüssig verbunden, vorzugsweise verschweißt.

Vorzugsweise sind die Rohre 46 elektrisch leitend miteinander verbunden.

Zudem ist das Rohrpaket mit einem Vorderteil und einem Hinterteil 48 der Steuerbox 14 fluiddicht verbunden, insbesondere verschweißt. Das bedeutet, dass das Gehäuse 20 sozusagen durch die Gitterstruktur 32 unterbrochen ist.

In Figur 6 ist zur besseren Ansicht der Gitterstruktur 32 nur das Hinterteil 48 der Steuerbox 14 dargestellt.

"Vorne" und "hinten" bezieht sich dabei auf die Strömungsrichtung des Dampfes.

Zudem geht aus Figur 6 hervor, dass der Querschnitt der einzelnen Strömungskanäle 34, welche vorliegend durch die Rohre 46 gebildet sind, nicht zwingend identisch sein muss.

In einer weiteren Ausführungsform, die in den Figuren der Einfachheit halber nicht separat dargestellt ist, ist die Gitterstruktur 32 durch ein Gussteil gebildet. Das Gussteil kann grundsätzlich ähnlich geformt sein wie die in den Figuren 2 bis 6 veranschaulichten Gitterstrukturen 32.

Figur 7 veranschaulicht eine weitere Ausführungsform einer Steuerbox 14.

Die Steuerbox 14 hat im Unterschied zu den vorhergehend beschriebenen Ausführungsformen zwei Gitterstrukturen 32, die mit einem Abstand zueinander angeordnet sind.

Die Länge der Gitterstrukturen 32 - bezogen auf einen Strömungsweg des Dampfes betrachtet - ist derart gewählt, dass die einzelnen Gitterstrukturen 32 alleine keine ausreichende Dämpfung von Mikrowellenstrahlung bewirken würde. Durch die Kombination der beiden Gitterstrukturen 32 wird jedoch eine ausreichende Dämpfung erreicht. Insbesondere sind die Gitterstrukturen 32 in Reihe angeordnet.

Die Gitterstrukturen 32 können zueinander beabstandet sein, wie dies in Figur 7 dargestellt ist. Alternativ können die Gitterstrukturen 32 auch direkt aneinander anliegen.

In Figur 7 sind die Gitterstrukturen 32 als Rohrpakete veranschaulicht, es ist jedoch genauso möglich, die Gitterstrukturen 32 durch ein Gussteil oder durch mehrere abgekantete Bleche zu bilden, wie in Zusammenhang mit den vorherigen Ausführungsformen beschrieben wurde.

Dabei müssen die beiden separaten Gitterstrukturen 32 nicht zwingend gleichartig sein.

Grundsätzlich kann demnach eine aus dem Garraum 12 stammende Garraumatmosphäre mit einem Dampfanteil und fetthaltigen Wrasen durch den Dampfeinlass 18 der Steuerbox 14 und den Dampfauslass 22 der Steuerbox 14 geführt werden. Da der Dampfauslass 22 (über das Entlüftungsrohr 26) mit dem Geräteausgang 27 in Strömungsverbindung steht, kann die Garraumatmosphäre mit dem Dampfanteil und den fetthaltigen Wrasen an die Umgebung des Gargeräts 10 abgeführt werden. Es ist also eine entsprechende Strömungsverbindung zwischen dem Garraum 12 und der Umgebung des Gargeräts 10 über die Steuerbox 14 ausgebildet.

Da im Gehäuse 20 der Steuerbox 14 die Gitterstruktur 32 vorhanden ist, die im Strömungsweg zwischen dem Dampfeinlass 18 und dem Dampfauslass 22 angeordnet ist, ist sichergestellt, dass eine Verbindung nur durch die Gitterstruktur 32 erfolgt. Insofern strömen der Dampf und die fetthaltigen Wrasen durch die Gitterstruktur 32 zum Geräteausgang 27, um an die Umgebung des Gargeräts 10 abgeführt zu werden.

Die Gitterstruktur 32 stellt aber gleichzeitig sicher, dass die von der Mikrowellenquelle 13 erzeugte Hochfrequenzstrahlung nicht über den Geräteausgang 27 aus dem Gargerät 10 austritt, also an die Umgebung des Gargeräts 10 abgegeben wird.

## Patentansprüche

1. Steuerbox (14) für ein Gargerät (10), mit einem Gehäuse (20), in dem mindestens ein Dampfeinlass (18) und mindestens ein Dampfauslass (22) vorhanden sind, wobei in dem Gehäuse (20) mindestens eine Gitterstruktur (32) zur Abschirmung von Hochfrequenzstrahlung vorhanden ist, wobei die Gitterstruktur (32) bezogen auf einen Strömungsweg des Dampfes zwischen dem Dampfeinlass (18) und dem Dampfauslass (22) angeordnet ist, und wobei die Gitterstruktur (32) eine Vielzahl von Strömungskanälen (34) hat, die abschnittweise einen Strömungsweg für den durch den Dampfeinlass (18) eintretenden Dampf zum Dampfauslass (22) bilden.

2. Steuerbox (14) nach Anspruch 1, **dadurch gekennzeichnet, dass** die Länge der Strömungskanäle (34) im Verhältnis zu einem Strömungsquerschnitt eines einzelnen Strömungskanals (34) derart gewählt ist, dass ein Leistungspegel einer auf die mindestens eine Gitterstruktur (32) treffenden elektromagnetischen Welle mit einer Frequenz von 2,4 GHz bis 2,5 GHz durch die Gitterstruktur (32) um mindestens 20 dB gedämpft wird, insbesondere um mindestens 40 dB.

3. Steuerbox nach Anspruch 1 oder 2, **dadurch gekennzeichnet, dass** die Länge der Strömungskanäle (34) größer als die Materialstärke der Gitterstruktur (32) ist.

4. Steuerbox (14) nach einem der vorhergehenden Ansprüche, **dadurch gekennzeichnet, dass** die mindestens eine Gitterstruktur (32) sich über die gesamte Höhe und/oder die gesamte Breite der Steuerbox (14) erstreckt.

5. Steuerbox (14) nach einem der vorhergehenden Ansprüche, **dadurch gekennzeichnet, dass** die mindestens eine Gitterstruktur (32) den Dampfeinlass (18) umfangsmäßig umgibt.

6. Steuerbox (14) nach Anspruch 5, **dadurch gekennzeichnet, dass** die mindestens eine Gitterstruktur (32) mehrere Trennwände (36) umfasst, die die Strömungskanäle (34) definieren, wobei sich die Trennwände (36) senkrecht von einem Gehäuseboden (33) zu einer Gehäusedecke (24) des Gehäuses (20) erstrecken.

7. Steuerbox (14) nach Anspruch 6, **dadurch gekennzeichnet, dass** die mindestens eine Gitterstruktur (32) eine ringförmige Basis (40) umfasst und sich die Trennwände (36) ausgehend von der Oberseite und der Unterseite der Basis (40) erstrecken.

8. Steuerbox (14) nach einem der Ansprüche 1 bis 4, **dadurch gekennzeichnet, dass** die mindestens eine Gitterstruktur (32) durch ein Rohrpaket gebildet ist.

9. Steuerbox (14) nach einem der Ansprüche 1 bis 4, **dadurch gekennzeichnet, dass** die mindestens eine Gitterstruktur (32) durch mehrere abgekantete Bleche (44) gebildet ist.

10. Steuerbox (14) nach einem der Ansprüche 1 bis 4, **dadurch gekennzeichnet, dass** die mindestens eine Gitterstruktur (32) durch ein Gussteil gebildet ist.

11. Steuerbox (14) nach einem der vorhergehenden Ansprüche, **dadurch gekennzeichnet, dass** die Strömungskanäle (34) eine Höhe und/oder eine Breite oder einen Durchmesser von mindestens 20 mm haben.

12. Steuerbox (14) nach einem der vorhergehenden Ansprüche, **dadurch gekennzeichnet, dass** die Steuerbox (14) eingerichtet ist, eine über den Dampfeinlass (18) erhaltene Garraumatmosphäre mit einem Dampfanteil und fetthaltigen Wrasen über den mindestens einen Dampfauslass (22) an eine Umgebung abzugeben.

13. Gargerät (10) zum Garen von Gargut, mit einem Garraum (12), einer Mikrowellenquelle (13), die eingerichtet ist, Hochfrequenzstrahlung in den Garraum (12) einzuspeisen, einem Geräteausgang (27) zur Umgebung des Gargeräts (10) und einer Steuerbox (14), wobei die Steuerbox (14) ein Gehäuse (20) aufweist, in dem mindestens ein Dampfeinlass (18) und mindestens ein Dampfauslass (22) vorhanden sind, wobei in dem Gehäuse (20) mindestens eine Gitterstruktur (32) zur Abschirmung der Hochfrequenzstrahlung vorhanden ist, wobei die Gitterstruktur (32) bezogen auf einen Strömungsweg des Dampfes zwischen dem Dampfeinlass (18) und dem Dampfauslass (22) angeordnet ist, wobei der Dampfeinlass (18) mit dem Garraum (12) in Strömungsverbindung steht, und wobei der Dampfauslass (22) mit dem Geräteausgang (27) in Strömungsverbindung steht.

14. Gargerät (10) nach Anspruch 13, **dadurch gekennzeichnet, dass** über die Steuerbox (14) eine Strömungsverbindung zwischen dem Garraum (12) und der Umgebung des Gargeräts (10) ausgebildet ist.

15. Gargerät (10) nach Anspruch 13 oder 14, **dadurch gekennzeichnet, dass** der Dampfauslass (22) mit dem Geräteausgang (27) über ein Entlüftungsrohr (26) in Strömungsverbindung steht.
